# EUROPEAN PATENT SPECIFICATION

(11) **EP 3 576 912 B1**
(45) Date of publication and mention of the grant of the patent: **18.01.2023**
(21) Application number: 18748615.4
(22) Date of filing: 05.02.2018
(51) Int. Cl.: B27B 25/02, B65G 39/00, A01G 23/099

(54) **FEED ROLLER**
VORSCHUBWALZE
ROULEAU D'ALIMENTATION

(30) Priority: 06.02.2017 FI 20175100
(43) Date of publication of application: 11.12.2019
(73) Proprietor: Mense Oy, 54500 Taavetti (FI)
(72) Inventor: MENTULA, Seppo, 54500 Taavetti (FI)
(74) Representative: Papula Oy
(86) International application number: PCT/FI2018/050077
(87) International publication number: WO 2018/142029

(56) References cited:
- EP-A1- 2 489 978
- FI-B- 110 228
- FI-B- 110 228
- FI-B- 125 361
- US-A1- 2002 033 203
- US-A1- 2008 115 859
- US-A1- 2008 156 397

## Description

### FIELD OF THE INVENTION

The invention relates to a feed roller used in forestry machines, such as harvesters and the like, for handling tree stems.

### BACKGROUND OF THE INVENTION

A feed roller for moving a tree stem in its longitudinal direction or holding it in its position must have two somewhat opposite features. It must have a firm and tight grip of the stem so that the stem will move correctly, while also handling the stem gently so that its surface will not be damaged, at least deeper into the wood.

The currently used feed rollers are mostly full-metal steel rollers where a cylindrical jacket is coated with ribs having a sharp outwardly protruding edge, the ribs extending parallel to the axis of rotation and their length corresponding to the width of the roller. Depending on the size of the roller, there may be for example 15-25 ribs disposed at an even spacing over the circumference. Corresponding structures are also known, where a round plate-type flange serves as the roller body, the straight ribs being then welded to extend in the axial direction, either directly to the flange, or to a circumferential jacket fixed around the flange.

While the prior art structures work relatively well, there still is need for gentler handling of the stems. Too often are the stem surfaces left with such deep handling marks by the rollers that the use of the stems in further processing becomes limited or difficult. Furthermore, the current steel rollers are relatively angulate, which causes vibrations and loud noise on the machine when the logs are being processed at a fast pace. Further problems are caused by the roller consisting of several separate parts, which requires a great deal of welding work and thus makes the roller expensive to manufacture. The known ribbed rollers also have a poor stem supporting capacity, i.e. the largest stems tend to slide out from the support of the rollers when being processed.

FI110228B discloses a feed roller as per the preamble of claim 1.

### OBJECT OF THE INVENTION

The object of the invention is to remedy the defects of the prior art mentioned above. Specifically, the object of the invention is to disclose a new feed roller that bites into a stem more smoothly and softly than the prior art feed rollers, causing less damage at the stem surface, less vibration in the machine, and less noise inside the machine and outside in the nature. A further object is to make the manufacture of the roller less expensive and improve the capacity of the roller to support the stem being processed.

### SUMMARY OF THE INVENTION

The feed roller according to the invention comprises a round plate-type flange body, and radial ribs fixed at an even spacing over its outer circumference with gripping members for providing a firm grip of the surface of a tree stem being handled by the feed roller. According to the invention, the outer edge of the plate-type ribs, i.e. the edge of the ribs protruding outwards in the radial direction of the roller, is disposed at an oblique angle to the axis of the feed roller, and the outer edge of each rib comprises several gripping members having a straight blade edge, arranged such that the blade edges extend in the axial direction of the feed roller. In other words, the outer edges of the plate-type ribs as such are disposed at an oblique angle to the axial direction of the feed roller, while the sharp and straight blade edges of their gripping members are disposed parallel to said axis. As a result, in the invention each of the long axial ribs of the conventional ribbed roller are separated into several parts, their orientation remaining the same, i.e. axial, while the parts are circumferentially offset in a stepwise manner, so that a line of blade edges at an angle to said axis is formed, where the actual blade edges providing the grip are disposed in an optimal way, i.e. perpendicular to the direction of rotation of the roller. Said oblique angle is appropriately between 15 - 45°, for example approximately 25°.

Preferably there are at least three gripping members at the edge of the same rib, for example 5-10 gripping members in a row at the outer edge of the rib. The number of the gripping members depends on the desired width of the feed roller being manufactured, and also on the thickness of the plate of which the ribs are made.

Preferably, the blade edges of the gripping members form a curved convex surface. When this convexity is suitably adjusted according to the oblique angle of the ribs, the blade edges of the gripping members of all ribs can be provided on the same cylindrical surface, i.e. the outer surface of the feed roller becomes a cylindrical surface formed by the blade edges.

In a preferred embodiment of the invention, the rib with its gripping members is machined from a single one-piece steel plate. Thus, there are no other kinds of parts in the feed roller except one round plate-type flange body and a number of identical ribs welded over its circumference with the blade structures on their outer edges. In other words, in the invention the rib with its gripping members is an integral piece with no seams or joints, which is welded to the flange body.

### ADVANTAGES PROVIDED BY THE INVENTION

The feed roller according to the invention provides considerable advantages over the prior art. The feed roller according to the invention is very simple and inexpensive to manufacture because the number of separate parts therein is just a fraction of the number of parts in the known rollers. In addition, the manufacture of the feed roller is easily automatizable, such that the machining of the billets of ribs welded to the flange body is carried out in a fully automatized manner. Further, the feed roller according to the invention bites into a tree stem more smoothly and firmly than the conventional rollers. In addition, the vibrations and loud noises caused by the known rollers are completely imperceptible with the feed roller according to the invention. The stepped edges formed by the gripping members according to the invention support the stem so effectively that the stem is not able to slide between the rollers, as it does in the prior art ribbed rollers.

### BRIEF DESCRIPTION OF THE DRAWINGS

The invention will now be described in detail with reference to the accompanying drawings, in which
Fig. 1 is an oblique view of one feed roller according to the invention,

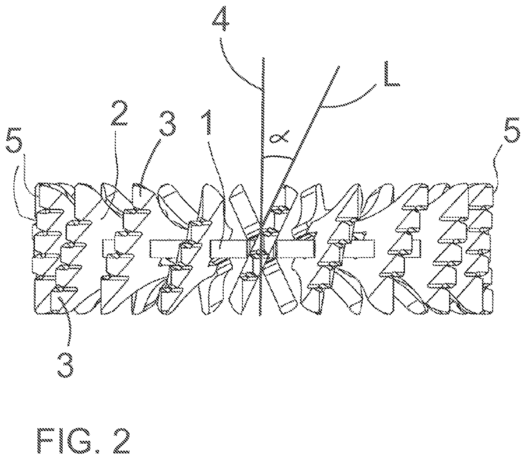

Fig. 2 shows the feed roller of Fig. 1 as seen along the circumference, and

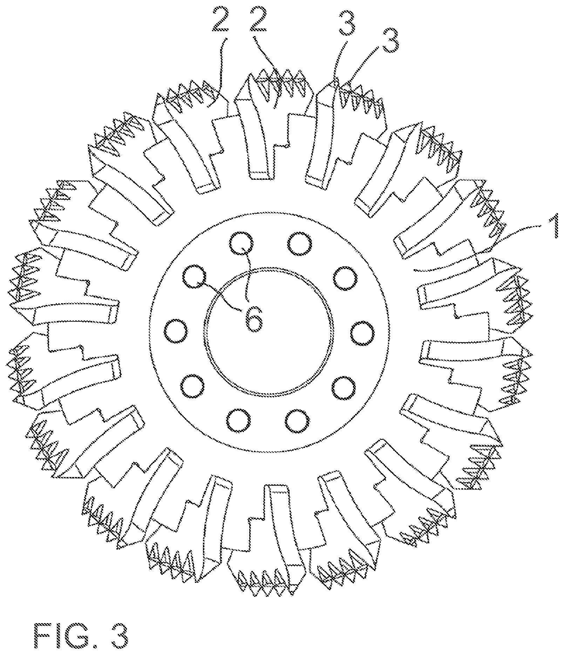

Fig. 3 is a side view of the feed roller of Fig. 1.

### DETAILED DESCRIPTION OF THE INVENTION

The feed roller illustrated in the figures comprises a round plate-type flange body 1 having a central hole surrounded by installation holes 6 for bolting the feed roller to a machine to be operated. The outer circumference of the flange body 1 is provided with evenly spaced plate-type ribs 2 shaped at the ends facing the flange body so as to correspond to installation recesses provided on the outer circumference of the flange body, the ribs being welded firmly to the outer circumference of the flange body so as to protrude away, i.e. outwardly from it.

The plate-type, substantially linear outer edge of the rib 2 is disposed at an oblique angle α to a line defined by the axis 4 of the roller. At the outer edge of the rib there are a number of gipping members 3, five in the figures, disposed one after another. The gripping members are formed by outwardly protruding straight blade edges 5, a straight line S of which is parallel to said axis 4. Thus, the blade lines of individual gripping members 3 are parallel to the axis 4 of the feed roller, even though the gripping members 3 are disposed in a line angled at an angle α to said axial line 4.

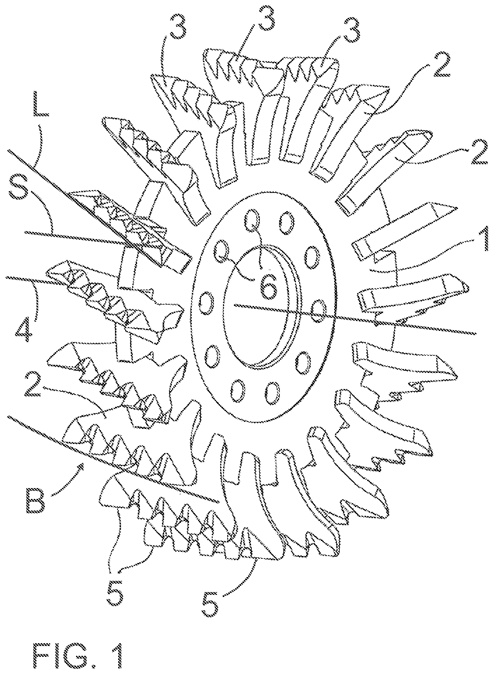

As shown by rib A in Fig. 1, the gripping members are disposed in said straight line L, and the orientation S of the blade edge 5 of each of the gripping members is parallel to the axis 4 of the roller. In addition, as shown by rib B in Fig. 1, the gripping members 3 are disposed, in the radial direction of the roller, at different distances from the axis of the roller, such that their blade edges 5 form a slightly curved line. This curvature corresponds to the total curvature of the roller along the circumference. Thus, the greater the angle α, the greater said curvature is to be adjusted. This way, the sharp blade edges that are parallel to the axis 4 in all gripping members at the ends of all ribs will lie on the same cylindrical surface, moving perpendicular to the longitudinal direction, i.e. the direction of movement, of a tree stem being processed. Thus, the grip of the tree stem is firm and tight, such that the roller feeds the stem being processed smoothly and noiselessly.

The invention has been described above by way of examples with reference to the accompanying drawings; however, various embodiments of the invention are possible within the scope defined by the claims.

## Claims

1. A feed roller, comprising a round plate-type flange body (1), and radial ribs (2) fixed at an even spacing over its outer circumference with gripping members (3) for providing a firm grip of the surface of a tree stem being handled by the feed roller, **characterized in that** the outer edge of the plate-type ribs (2) is disposed at an oblique angle (α) to the axis (4) of the feed roller, and the outer edge of each rib (2) comprises several gripping members having a straight blade edge (5), arranged such that the blade edges extend parallel to the axis (4) of the feed roller.

2. The feed roller according to claim 1, **characterized in that** there are at least three gripping members (3), for example 5-10 in a row at the outer edge of the rib (2).

3. The feed roller according to claim 1 or 2, **characterized in that** the blade edges (5) of the gripping members (3) form a curved convex surface.

4. The feed roller according to any one of claims 1-3, **characterized in that** the blade edges (5) of the gripping members (3) of all ribs (2) lie on the same cylindrical surface.

5. The feed roller according to any one of claims 1-4, **characterized in that** the rib with its gripping members is machined from a single one-piece steel plate.

6. The feed roller according to any one of claims 1-5, **characterized in that** the rib with its gripping members is an integral piece with no seams or joints, which is welded to the flange body (1).

7. The feed roller according to any one of claims 1-5, **characterized in that** said oblique angle (α) is between 15° - 45°, for example approximately 25°.

## Patentansprüche

1. Zuführwalze, umfassend einen runden plattenförmigen Flanschkörper (1) und radiale Rippen (2), die in gleichmäßigem Abstand über ihren Außenumfang mit Greifelementen (3) befestigt sind, um einen festen Halt der Oberfläche eines Baumstammes bereitzustellen, der durch die Zuführwalze gehandhabt wird, **dadurch gekennzeichnet, dass** die Außenkante der plattenförmigen Rippen (2) in einem schiefen Winkel (a) zu der Achse (4) der Zuführwalze angeordnet ist und die Außenkante jeder Rippe (2) mehrere Greifelemente umfasst, die eine gerade Messerkante (5) aufweisen, die derart angeordnet sind, dass sich die Messerkanten parallel zu der Achse (4) der Zuführwalze erstrecken.

2. Zuführwalze nach Anspruch 1, **dadurch gekennzeichnet, dass** an der Außenkante der Rippe (2) mindestens drei Greifelemente (3), beispielsweise 5-10 in einer Reihe, vorhanden sind.

3. Zuführwalze nach Anspruch 1 oder 2, **dadurch gekennzeichnet, dass** die Messerkanten (5) der Greifelemente (3) eine gekrümmte konvexe Oberfläche ausbilden.

4. Zuführwalze nach einem der Ansprüche 1 bis 3, **dadurch gekennzeichnet, dass** die Messerkanten (5) der Greifelemente (3) aller Rippen (2) auf der gleichen zylindrischen Oberfläche liegen.

5. Zuführwalze nach einem der Ansprüche 1 bis 4, **dadurch gekennzeichnet, dass** die Rippe mit ihren Greifelementen aus einer einzigen einstückigen Stahlplatte herausgearbeitet ist.

6. Zuführwalze nach einem der Ansprüche 1 bis 5, **dadurch gekennzeichnet, dass** die Rippe mit ihren Greifelementen ein integrales Stück ohne Nähte oder Verbindungen ist, das an den Flanschkörper (1) geschweißt ist.

7. Zuführwalze nach einem der Ansprüche 1 bis 5, **dadurch gekennzeichnet, dass** der schiefe Winkel (a) zwischen 15° und 45° liegt, beispielsweise etwa 25°.

## Revendications

1. Rouleau d'alimentation, comprenant un corps de bride de type plaque ronde (1), et des nervures radiales (2) fixées selon un espacement régulier sur sa circonférence externe avec des éléments de préhension (3) pour assurer une préhension ferme de la surface d'une tige d'arbre manipulée par le rouleau d'alimentation, **caractérisé en ce que** le bord externe des nervures de type plaque (2) est disposé à un angle oblique (α) par rapport à l'axe (4) du rouleau d'alimentation, et le bord externe de chaque nervure (2) comprend plusieurs éléments de préhension présentant un bord de lame droit (5), agencés de telle sorte que les bords de lame s'étendent parallèlement à l'axe (4) du rouleau d'alimentation.

2. Rouleau d'alimentation selon la revendication 1, **caractérisé en ce qu'**il y a au moins trois éléments de préhension (3), par exemple de 5 à 10, dans une rangée au niveau du bord externe de la nervure (2).

3. Rouleau d'alimentation selon la revendication 1 ou 2, **caractérisé en ce que** les bords de lame (5) des éléments de préhension (3) forment une surface convexe incurvée.

4. Rouleau d'alimentation selon l'une quelconque des revendications 1-3, **caractérisé en ce que** les bords de lame (5) des éléments de préhension (3) de toutes les nervures (2) se trouvent sur la même surface cylindrique.

5. Rouleau d'alimentation selon l'une quelconque des revendications 1-4, **caractérisé en ce que** la nervure avec ses éléments de préhension est usinée à partir d'une plaque d'acier monobloc unique.

6. Rouleau d'alimentation selon l'une quelconque des revendications 1-5, **caractérisé en ce que** la nervure avec ses éléments de préhension est une pièce intégrale sans joint ni liaison, qui est soudée au corps de bride (1).

7. Rouleau d'alimentation selon l'une quelconque des revendications 1-5, **caractérisé en ce que** ledit angle oblique (α) est compris entre 15° et 45°, par exemple d'approximativement 25°.
